Europäisches Patentamt

European Patent Office

Office européen des brevets

(19)

(11) **EP 0 697 372 B1**

(12) **EUROPÄISCHE PATENTSCHRIFT**

(45) Veröffentlichungstag und Bekanntmachung des Hinweises auf die Patenterteilung:
**10.06.1998 Patentblatt 1998/24**

(21) Anmeldenummer: **95110881.0**

(22) Anmeldetag: **12.07.1995**

(51) Int. Cl.⁶: **C01B 13/32**, C01B 33/16, C01G 25/02, B01J 13/00, C01B 33/20

(54) **Wasser- und hydroxylgruppenfreie Gele und Xerogele, Verfahren zu deren Herstellung und deren Verwendung**

Water-free and hydoxyl-free gels or xerogels, process for their preparation and their use

Gels ou xérogels exempts d'eau ou de groupements hydroxyles, procédé pour leur préparation et leur utilisation

(84) Benannte Vertragsstaaten:
**DE ES FR GB IT**

(30) Priorität: **19.08.1994 DE 4429533**

(43) Veröffentlichungstag der Anmeldung:
**21.02.1996 Patentblatt 1996/08**

(73) Patentinhaber:
**CERDEC AKTIENGESELLSCHAFT KERAMISCHE FARBEN**
**D-60327 Frankfurt (DE)**

(72) Erfinder:
• **Jansen, Martin, Prof.**
**D-53127 Bonn (DE)**
• **Günther, Eberhard**
**D-53859 Niederkassel (DE)**

(56) Entgegenhaltungen:
EP-A- 0 021 333          WO-A-93/23333
WO-A-94/24052          FR-A- 2 585 973

• **DATABASE WPI Derwent Publications Ltd., London, GB; AN 92-362499 & JP-A-04 265 225 (TSUCHIYA)**

**Beschreibung**

Die Erfindung richtet sich auf wasser- und hydroxylgruppenfreie Gele und Xerogele auf der Basis eines Netzwerks aus sauerstoffverbrückten Metall- und/oder Halbmetallatomen, deren nicht-verbrückte Valenzen durch Sauerstoff und/oder organische Reste, nicht aber Halogenatome abgesättigt sind. Das erfindungsgemäße Verfahren basiert auf einem nicht-hydrolytischen Sol-Gel-Prozeß, wobei Gele und Xerogele unterschiedlichster Zusammensetzung erhältlich sind. Die Erfindung richtet sich ferner auf die Verwendung der Gele und Xerogele zur Herstellung von oxidischen keramischen Materialien und zur Umhüllung von teilchenförmigen Feststoffen mit einer Schicht oxidkeramischen Materials.

Im Stand der Technik sind viele Gele und Xerogele auf der Basis von Netzwerken sauerstoffverbrückter Metall- oder Halbmetallatome bekannt. Derartige Gele und Xerogele besitzen unterschiedliche Einsatzmöglichkeiten, etwa als Adsorptionsmittel sowie als Rohstoff für Katalysatoren und oxidkeramische Stoffe. Derartige Gele lassen sich durch Tempern in sehr reine oxidische Materialien umwandeln.

Unter dem Begriff "Gele" werden nachfolgend disperse Systeme aus einem netzwerkbildenden Stoff und einem flüssigen Dispersionsmittel verstanden. Unter dem Begriff "Xerogele" werden Gele verstanden, die ihre Flüssigkeit auf irgendeine Weise, etwa durch Verdampfen, Abpressen und Absaugen, verloren haben, wobei sich die räumliche Anordnung des Netzes verändern kann, indem die Abstände zwischen den Strukturelementen geringer werden und ein Grenzzustand zum Festkörper erreicht wird.

Gele auf der Basis eines Netzwerks aus sauerstoffverbrückten Metallatomen oder Halbmetallatomen werden im allgemeinen durch einen Sol-Gel-Prozeß hergestellt. Als Ausgangsstoffe für sogenannte hydrolytische Sol-Gel-Prozesse, welche sowohl eine Hydrolyse als auch eine Kondensationsreaktion umfassen, dienen beispielsweise Metall- oder Halbmetallsalze, wie Nitrate oder Chloride, die in wäßriger Phase pH-abhängig in der ersten Stufe hydroxyliert werden, oder Metall- oder Halbmetallalkoxide, die in einem organischen Lösungsmittel durch Zusatz von Wasser ganz oder teilweise hydroxyliert werden; an diese erste Stufe schließt sich der Kondensationsschritt unter Wasserabspaltung an. Bei derartigen hydrolytischen Sol-Gel-Prozessen bereitet es bei der Herstellung binärer Oxidgele Schwierigkeiten, die Stöchiometrie zu steuern, so daß die Homogenität nicht gewährleistet ist - siehe Chemistry of Materials, Vol. 4, No. 5 (1992), 961-963. Die durch Hydrolyse initiierte Kondensationsreaktion ist wegen der Nucleophilie des Wassers reversibel, was einer gleichmäßigen Gelbildung hinderlich ist. Ein weiteres Problem dieser wäßrigen Sol-Gel-Prozesse ist die zu schnelle Gelbildung. Um das Wachstum des Gels zu kontrollieren, muß die Zufuhr des Kondensationsmittels Wasser langsam und kontrolliert erfolgen und dessen Konzentration innerhalb der Lösung gleichmäßig sein. Dies kann zwar durch "in situ" Erzeugung von Wasser durch wasserliefernde Nebenreaktionen, wie Esterbildung aus Alkoholen und Carbonsäuren oder Acetalbildung aus Alkoholen und Aldehyden, innerhalb der Reaktionsmischung geschehen, jedoch lassen sich Probleme bei der Weiterverarbeitung der Gele nicht vermeiden.

Unter Verwendung des Systems Tetraethylorthosilikat, Ethanol und Benzaldehyd kann vorgelegtes Cadmiumsulfoselenidpigment in das sich bildende Silikat eingeschlossen werden. Es zeigte sich jedoch bei Temperversuchen, daß im Gel eingeschlossenes Wasser nur schwer vollständig zu entfernen ist. Zudem hat es die Eigenschaft, ab einer bestimmten Temperatur abrupt aus dem Gel auszutreten. Dadurch zersplittert das Gel und legt das Pigment frei, welches bei den herrschenden Temperaturen zerstört wird. Wasserhaltige Gele scheinen daher zur Erzeugung einer widerstandsfähigen Umhüllung um temperaturempfindliche Pigmente nicht geeignet zu sein.

Zur Überwindung der Probleme hydrolytischer Sol-Gel-Prozesse werden in dem zuvor genannten Dokument nichthydrolytische Sol-Gel-Prozesse offenbart. Hiernach werden unter wasser- und alkoholfreien Bedingungen Metallalkoxide mit Metallhalogeniden umgesetzt, wobei durch eine direkte Kondensationsreaktion die Sauerstoffverbrückung zwischen zwei Metallatomen erfolgt und Alkylhalogenid abgespalten wird:

$$M(OR)_n + M'X_{n'} \rightarrow (RO)_{n-1} M-O-M'X_{n'-1} + RX$$

M und M' stehen für Metalle und Halbmetalle aus der Reihe Si, Al, Ti und Zr, n und n' für deren Wertigkeit; OR für Alkoxid und X für Halogen. Bei der weiteren Kondensation, als Nebenreaktion erfolgt auch ein Ligandenaustausch, bildet sich ein Netzwerk mit gleichmäßiger Verteilung der Strukturelemente M-O-M', M-O-M und M'-O-M'.

Die Reaktivität der Reaktionspartner des vorbekannten nichthydrolytischen Sol-Gel-Prozesses ist teilweise recht unterschiedlich. Die Verwendung vom $MX_n$ anstelle $M(OR)_n$ und $M'(OR)_{n'}$ anstelle $M'X_{n'}$ kann zwar in einigen Fällen eine gewünschte Reaktivitätssteigerung mit sich bringen, dieser Austausch ist aber nicht allgemein anwendbar. Ferner ist die Anwesenheit von Halogen in den Gelen und daraus zugänglichen Xerogelen im Hinblick auf einige Einsatzgebiete unerwünscht, und die Entstehung von Alkylhalogenid während der Kondensationsreaktion erfordert aus toxikologischen Gründen besondere Sicherheitsmaßnahmen.

Die Aufgabe der vorliegenden Erfindung besteht somit darin, einen weiteren nichthydrolytischen Sol-Gel-Prozeß aufzuzeigen, um die prinzipiellen Herstellmöglichkeiten zu erweitern. Eine weitere Aufgabe richtet sich auf die Bereitstellung neuer wasser- und hydroxylgruppenfreier Gele, deren Netzwerk frei ist von an Metallatome gebundenem Halogen.

2

Schließlich sollten sich die erfindungsgemäßen Gele und das Verfahren zu ihrer Herstellung auch dazu verwenden lassen, teilchenförmige Partikel mit einer Gelhülle zu umgeben, um nach thermischer Behandlung zu umhüllten Partikeln mit einer dichten Hülle aus oxidkeramischem Material zu gelangen, was mittels vorbekannter hydrolytischer Sol-Gel-Prozesse nicht befriedigend möglich war.

Gefunden wurde ein neuer nichthydrolytischer Sol-Gel-Prozeß, der zu neuen Gelen und Xerogelen führt, die sich als Ausgangsstoffe für oxidische keramische Materialien eignen.

Gegenstand der Erfindung sind somit wasser- und hydroxylgruppenfreie Gele und Xerogele auf der Basis eines Netzwerks aus sauerstoffverbrückten Metall- und/oder Halbmetallatomen, wobei das Netzwerk eine oder mehrere Arten Metall- und/oder Halbmetallatome enthält und zusätzlich vorhandene nichtverbrückte Valenzen der Metall- und/oder Halbmetallatome durch Sauerstoffatome und/oder durch einwertige Reste aus der Reihe -Q und/oder -OT abgesättigt sind, wobei -Q für $-OR^1$ oder $-NR^1R^2$, -T für $-C(O)R^3$ und $R^1$, $R^2$ und $R^3$ für einen aliphatischen oder aromatischen organischen Rest stehen, und an Metall- und/oder Halbmetallatomen kein Halogen gebunden ist.

Das Netzwerk der erfindungsgemäßen Gele und Xerogele kann eine einzige Art Metall- oder Halbmetallatome enthalten; in diesem Fall bildet das Xerogel eine Vorstufe für reine Oxide. Wesentliche Strukturelemente des Netzwerks derartiger Gele sind M-O-M (M = Metall oder Halbmetall), M=O, M-Q und M-T.

Sofern bei der nachfolgend beschriebenen erfindungsgemäßen Herstellung der Gele Verbindungen von zwei, drei oder vier verschiedenen Metallen oder Halbmetallen in stöchiometrischer Menge eingesetzt werden, sind binäre, ternäre oder quartäre Gele und Xerogele erhältlich - unter stöchiometrisch wird hierbei ein Atomverhältnis verstanden, wie es den aus den Xerogelen durch Temperung erhältlichen Mischoxiden zueigen ist.Durch das erfindungsgemäße Verfahren sind auch Gele und Xerogele zugänglich, welche im Netzwerk zusätzlich ein oder mehrere dotierende Metalle oder Halbmetalle in gleichmäßiger Verteilung enthalten: die Menge an Dotierungselementen richtet sich nach dem gewünschten Einsatzzweck und umfaßt den Bereich von Bruchteilen von Atomprozenten, bezogen auf das beziehungsweise die netzwerkbildenden Metalle oder Halbmetalle, bis zu einer Menge, welche nach der Temperung der Xerogele reinen Mischoxiden zugrundeliegt.

Bei den Halbmetallen der erfindungsgemäßen Gele und Xerogele handelt es sich insbesondere um Bor; Silicum und Germanium; Arsen, Antimon und Wismut; Selen und Tellur. Bei den Metallen handelt es sich um solche der 2. bis 6. Hauptgruppe, der Nebengruppen und der Seltenerdelemente. Die Metalle müssen zur Alkoholat-, Amid- und/oder Carboxylatbildung befähigt sein und in Form einer solchen Verbindung wenigstens teilweise in einem aprotischen, wenig polaren Lösungsmittel löslich sein. Bevorzugte Metalle und Halbmetalle sind solche der 3. bis 5. Haupt- und Nebengruppe und der Seltenerdelemente, insbesondere B, Al, Si, Ge, Sn; Ti, Zr, Hf, V; Sc, Y, La, Ce, Pr.

Die Wertigkeit der Metalle und Halbmetalle liegt zwischen 2 und 6, vorzugweise zwischen 3 und 5. Die Gele können auch eine Art oder zwei Arten zweiwertiger Metallatome aufweisen, weil zur dreidimensionalen Netzwerkbildung außer Hauptvalenzen auch Nebenvalenzen wirksam werden und damit eine Gelbildung ermöglichen. Nebenvalenzen sind, wie aus IR-spektroskopischen Untersuchungen nahegelegt wird, durch anwesende Carboxylatgruppen möglich. Binäre Gele enthalten im Netzwerk vorzugsweise 2- und höherwertige, insbesondere 3- und 3-, 3- und 4-, 3- und 5-, 4- und 4- und 4- und 5-wertige Metalle und/oder Halbmetalle. Binäre Gele enthalten als wesentliches Strukturelement $M^1$-O-$M^2$; sofern es während der Herstellung der Gele nach dem erfindungsgemäßen Verfahren zu einem Ligandenaustausch der an $M^1$ und $M^2$ gebundenen Reste -Q und -OT kommt, sind auch Strukturelemente $M^1$-O-$M^1$ und $M^2$-O-$M^2$ zu erwarten.

Bei dem Rest -Q handelt es sich um an einen Sauerstoff gebundenen organischen Rest $-OR^{1,}$ vorzugsweise um eine Alkoxy- oder Aryloxygruppe, oder um eine Dialkylaminogruppe, Monoarylalky- oder Diarylaminogruppe - $NR^1R^2$. Bevorzugte Gruppen $R^1$ und $R^2$ sind Alkylgruppen, welche linear oder verzweigt sein können und vorzugsweise 1 bis 6, insbesondere 1 bis 3 C-Atome enthalten, oder Phenyl oder substituiertes Phenyl. Bei dem Rest -OT handelt es sich um eine aliphatische oder aromatische Acyloxygruppe - $OC(O)-R^3$, deren Rest $R^3$ bevorzugt Phenyl oder substituiertes Phenyl oder lineares oder verzweigtes Alkyl mit 1 bis 6, insbesondere 1 bis 3 C-Atomen ist. Besonders bevorzugt steht T für einen Acetyl- oder Propionylrest. Nach dem erfindungsgemäßen Verfahren erhältliche Gele und Xerogele enthalten in der Regel noch an die Metall- bzw. Halbmetallatome gebundene Reste -Q und/oder -OT. Die Menge richtet sich nach dem Umsatz der Kondensationsreaktion und nach dem Verhältnis der Anzahl Äquivalente -Q und Äquivalente -OT im Einsatzstoffgemisch.

Erfindungsgemäße Gele enthalten als Dispersionsmittel ein aprotisches, schwach- oder vorzugsweise nicht nukleophiles Lösungsmittel. Wegen der starken Elektrophilie der Edukte, welche im erfindungsgemäßen Verfahren eingesetzt werden, darf das Lösungsmittel nicht oder nur wenig nukleophil sein. Zweckmäßigerweise sind die Lösungsmittel wenig polar und weisen einen Siedepunkt im Bereich von 50 °C bis 230 ° C, vorzugsweise 80 °C bis 150 °C, auf, damit das Lösungsmittel problemlos bei der Überführung der Gele in die Xerogele rückstandsfrei ausgetrieben werden kann. Als Dispersionsmittel eignen sich insbesondere aliphatische, cycloaliphatische und aromatische Kohlenwasserstoffe, wie insbesondere Isoparaffine mit einem Siedepunkt im Bereich von 80 bis 230 °C und Alkylaromaten, etwa Toluol. Im Prinzip können die Gele auch wenig polare halogenierte Kohlenwasserstoffe als Dispersionsmittel enthalten; solche Lösungsmittel sind aber weniger bevorzugt.

Zur Charakterisierung der Gele und Xerogele eignen sich neben der chemischen Analyse, spektroskopischen Methoden, etwa FTIR-Spektren, und der Differentialthermoanalyse auch Verfahrensparameter.

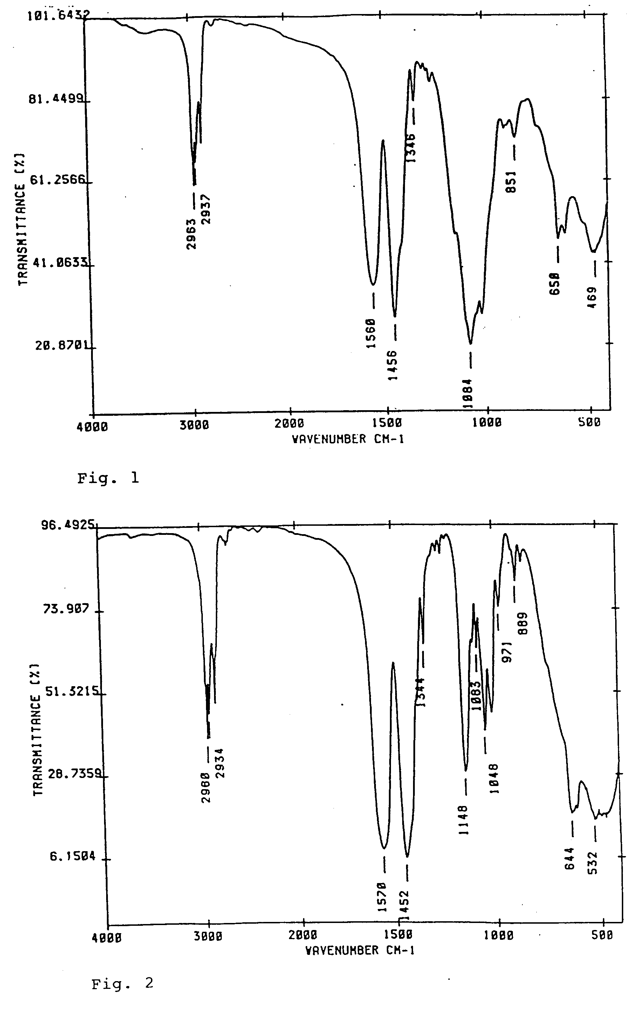

Hingewiesen wird auf die Figuren 1 und 2, welche das FTIR-Spektrum der Xerogele des Beispiels 1 (Gel als Vorstufe für $ZrSiO_4$) und des Beispiels 2 (Vorstufe für $ZrO_2$) zeigen. In Fig. 1 sind unter anderem zu erkennen: 650 cm$^{-1}$ und 610 cm$^{-1}$: (Zr-O)-Valenzschwingungen; 476 cm$^{-1}$: (Zr-O-Zr)-Valenzschwingungen; 1564 cm$^{-1}$ asymmetrische und 1458 cm$^{-1}$ symmetrische (COO)-Valenzschwingung, wobei der Abstand typisch ist für chelatisierende Acetatgruppen mit einer Haptizität von $\eta$ = 2; die in der Literatur einer (Zr-O-Si)-Bindung zugeordneten Banden bei 900 cm$^{-1}$ und 640 cm$^{-1}$ sind hier nicht direkt erkennbar, es wird jedoch angenommen, daß die Bande bei 852 cm$^{-1}$ und ein Teil der Bande bei 1084 cm$^{-1}$ diesem Strukturelement zuzuordnen sind.

Die erfindungsgemäßen Gele lassen sich dadurch herstellen, daß man einen nichthydrolytischen Sol-Gel-Prozeß in einem inerten, wasser- und hydroxylgruppenfreien organischen Lösungsmittel durchführt, wobei eine oder mehrere Verbindungen (I) aus der Reihe der Metall- oder Halbmetallalkoholate, -oxoalkoholate, -amide oder -oxoamide mit einer oder mehreren Verbindungen (II) aus der Reihe der Metall- oder Halbmetallcarboxylate oder -oxocarboxylate, wobei (I) und (II) als solche oder im Falle von Stoffgemischen im statischen Mittel mindestens zwei und vorzugsweise (I) und/oder (II) mehr als zwei abspaltbare Gruppen aufweisen, unter Abspaltung von Carbonsäureestern oder Carbonsäureamiden bis zur Gelbildung kondensiert werden.

Der Sol-Gel-Prozeß wird zweckmäßigerweise in einem Lösungsmittel oder Lösungsmittelgemisch mit den zuvor genannten Eigenschaften durchgeführt. Die umzusetzenden Metall- oder Halbmetallverbindungen (I) und (II) sollten zumindest teilweise in dem Lösungsmittel löslich sein, um eine Kondensationsreaktion zu ermöglichen. Es wurde festgestellt, daß zu Beginn der Umsetzung im wesentlichen im Lösungsmittel suspendierte Metall- und Halbmetallverbindungen während der Umsetzung in Lösung gehen. Durch die Kondensation von (I) mit (II) bildet sich zunächst ein Organosol, erkenntlich am Tyndall-Effekt. Durch fortgesetzte Kondensation der gelösten Oligomeren verwandeln sich die Sole in Gele, also vernetze Polymere, wobei an der Vernetzung auch Nebenvalenzen wirksam werden können. Das Gel kann als monolithischer Block oder bei ausreichender Menge Lösungsmittel und intensivem Rühren in Form von Partikeln koagulieren.

Die Reaktionstemperatur ist wenig kritisch; zweckmäßigerweise liegt sie im Bereich zwischen 0 °C und 230 °C, vorzugsweise zwischen 20 und 150 °C, insbesondere zwischen 60 und 130 °C. Die Reaktionsdauer hängt naturgemäß von der Reaktionstemperatur ab und liegt im allgemeinen im Bereich von 1 bis 100 h (=Stunden).

Die umzusetzenden Metall- und Halbmetallalkoholate, -oxoalkoholate, -amide und -oxoamide (I) sowie -carboxylate und -oxocarboxylate (II) weisen die nachstehenden allgemeinen Formeln auf, wobei $M^1$ beziehungsweise $M^2$ jeweils für ein Metall- oder Halbmetallatom und m beziehungsweise n für deren Wertigkeit stehen:

(I): $M^1(OR^1)_m$; $M^1O_x(OR^1)_{(m-2x)}$
$M^1(NR^1R^2)_n$; $M^1O_x(NR^1R^2)_{(m-2x)}$
(II): $M^2(O\text{-}C(O)\text{-}R^3)_n$;
$M^2O_y(O\text{-}C(O)\text{-}R^3)_{(n-2y)}$

$R^1$, $R^2$, $R^3$ stehen wiederum für jeweils einen organischen Rest mit der bereits genannten Bedeutung. m und n stehen für eine ganze Zahl zwischen 2 und 6; vorzugsweise ist wenigstens m oder n 3 oder größer 3; besonders bevorzugte Wertigkeiten liegen zwischen 3 und 5. x und y stehen für die Atomzahl Oxoatome in (I) beziehungsweise (II). Sofern es sich bei (I) und (II) um reine Stoffe handelt, stehen x und y für eine ganze Zahl 0, 1 oder 2. Sofern es sich bei (I) und (II) um Stoffgemische handelt, also um partiell oxylierte Alkoholate oder Amide beziehungsweise partiell oxylierte Carboxylate, stehen x und y für eine beliebige Zahl zwischen größer 0 und kleiner 2, wobei die Indices (m-2x) beziehungsweise (n-2y) für einen Wert von mindestens 2 bis m beziehungsweise n stehen.

Bei der erfindungsgemäßen Herstellung erfindungsgemäßer Gele werden ein oder mehrere Stoffe (I) mit ein oder mehreren Stoffen (II) gemäß folgender allgemeiner Gleichung umgesetzt - dargestellt am Beispiel der Herstellung binärer Gele wobei zur Vereinfachung, wie bereits zuvor erfolgt, die Reste -$OR^1$ und -$NR^1R^2$ als Q und -O-C(O)-$R^3$ als -OT bezeichnet werden:

$$a\, M^1O_xQ_{m-2x} + b\, M^2O_y(OT)_{n-2y} \rightarrow z\, Q\text{-}T + M^1{}_aM^2{}_bO_{(ax+by+z)}Q_{(am-2ax-z)}(OT)_{(bn-2by-z)}$$

$M^1$, $M^2$, m, n, x, y, -Q und -OT haben die bereits genannte Bedeutung. Die Molzahlen a und b legen die Stöchiometrie fest, in welcher (I) und (II) miteinander umgesetzt werden, und z steht für die Umsatzzahl gebildeter Mol QT. a und b werden vorzugsweise so gewählt, daß bei Eintritt der Gelbildung z einen Zahlenwert zwischen größer 2 und dem kleineren Wert der Indices (am-2ax) und (bn-2by) annimmt. Beispielhaft werden aus äquimolaren Mengen $ZrQ_4$ und $Si(OT)_4$ Gele der Formel $ZrSiO_zQ_{(4-z)}(OT)_{4-z}$ und aus 2 Mol $VOQ_3$ und 1 Mol $Zr(OT)_4$ Gele der Formel $V_2ZrO_{(2+z)}Q_{(6-z)}OT_{(4-z)}$ mit z jeweils größer 2 bis 4 erhalten. Wie bereits ausgeführt, kann das gelbildende Reaktionsgemisch Stoffe I und II enthalten, in welchen $M^1$ und $M^2$ das gleiche Metall- oder Halbmetallatom bedeuten - beispielhaft wird aus $ZrQ_4$

EP 0 697 372 B1

und $Zr(OT)_4$ ein Gel mit dem Netzwerk $Zr_2O_zQ_{4-z}(OT)_{4-z}$ erhalten, wobei z bevorzugt größer 2 bis 4 ist. Desweiteren kann im Reaktionsgemisch neben den Hauptkomponenten (I) und (II) eine Teilmenge von (I) und/oder (II) durch eine zur Dotierung geeignete Menge einer oder mehrerer Verbindungen des Strukturtyps (I) und/oder (II) substituiert sein - auf diese Weise sind nach Trocknung des Gels und Calcinierung des Xerogels in Gegenwart von Sauerstoff gleichmäßig dotierte Oxide und Mischoxide erhältlich.

Die Reaktivität der Komponenten I und II sowie das Äquivalentverhältnis -Q zu -OT im Reaktionsgemisch beeinflussen die Umsetzung und damit z. Durch unterschiedliche Kombination, etwa $M^1Q_4$ mit $M^2(OT)_4$ oder $M^1(OT)_4$ mit $M^2Q_4$ können unterschiedliche Reaktionszeiten (Gelzeit) und unterschiedliche Vernetzungsgrade des Gels erzielt werden.

Die erfindungsgemäß hergestellten Gele lassen sich leicht durch Verdampfen des Lösungsmittels unter vermindertem Druck in die erfindungsgemäßen Xerogele überführen.

Die erfindungsgemäßen Gele und Xerogele lassen sich zur Herstellung oxidischer keramischer Materialien, nämlich Oxiden, Mischoxiden und mit weiteren Metallen dotierten Oxiden und Mischoxiden verwenden. Die Gele lassen sich ferner zum Umhüllen teilchenförmiger Stoffe mit einer Schicht eines oxidischen keramischen Materials verwenden.

Eine spezielle Anwendung der erfindungsgemäßen Gele sowie des erfindungsgemäßen wasserfreien Sol-Gel-Prozesses ist die Herstellung von Einschlußpigmenten. Es ist gelungen, Pigmentkörner praktisch quantitativ in Umhüllungen aus wasserfreiem Gel einzuschließen. Die rohe Gelhülle kann durch Trocknen in eine Xerogelhülle überführt und diese durch schonendes Tempern in Gegenwart von Sauerstoff von organischen Restbestandteilen befreit und in eine oxidische Keramik von hoher Stabilität umgewandelt werden. Durch Zusatz von Mineralisatoren während des Tempervorgangs kann die Kristallisation der amorphen Gelhülle bei tieferen Temperaturen ablaufen als in deren Abwesenheit, was für empfindliche Farbkörper schonender ist. Als Mineralisatoren finden Alkalifluoride und Alkalihalogenid-Mischungen Verwendung. Im Gegensatz zu nach vorbekannten Verfahren hergestellten Einschlußpigmenten (DE 231 2535) ist die Farbkörperumhüllung von unter Verwendung des erfindungsgemäßen Sol-Gel-Prozesses erhaltenen Einschlußpigmenten nicht einkristallin, sondern besteht aus einem Gefüge vieler Kristallite. Zum Teil können diese oxidischen Umhüllungen noch amorphe Anteile enthalten. Die Dichtigkeit dieser Umhüllungen ist aber ausreichend, um den eingeschlossenen Farbkörper auch bei extremen Temperaturen, wie sie beim Dekorieren keramischer Artikel erforderlich sind, umschlossen zu halten. Zudem ist es ein besonderer Vorteil, daß unter Verwendung erfindungsgemäßer Gele Einschlußpigmente mit einer viel höheren Einschlußrate und damit höherer Farbintensität erhältlich sind.

Die wesentlichen Vorteile der erfindungsgemäßen Gele und Xerogele sowie des Verfahrens zu ihrer Herstellung sind:

- die Gele sind wasser- und hydroxylgruppenfrei und ermöglichen damit eine störungsfreie Überführung Gelumhüllter Pigmente in dichte Einschlußpigmente mit hoher Einschlußrate;
- - die Gele sind frei von gebundenem Halogen, was die Anwendungsmöglichkeiten erweitert und die Anwendungsverfahren vereinfacht;
- die Verteilung unterschiedlicher Metallatome im Netzwerk des Gels ist sehr gleichmäßig, was sich auf die Homogenität der Folgeprodukte günstig auswirkt;
- das Verfahren zur Herstellung der Gele läßt sich leicht steuern, da es einstufig ist;
- die Gele, Xerogele und hieraus oxidische Stoffe sind in hoher Reinheit und mit gezielter, auf den Anwendungszweck, etwa als Katalysatoren, maßgeschneiderter Zusammensetzung erhältlich;
- die Möglichkeiten, oxidische keramische Materialien aus Gelen zu erhalten, wurden durch das neue Verfahren und die breite Stoffauswahl erweitert.

**Beispiel 1**: Herstellung von Zirkoniumsilikat durch den erfindungsgemäßen nichtwäßrigen Sol-Gel-Prozeß und anschließende Temperung

Zur Herstellung von propanolfreiem Zirkoniumtetra-n-propylat wird eine handelsübliche 70 %ige Lösung von Zirkoniumtetra-n-propylat in Propanol 24 h einer Destillation im Feinvakuum bei 150 °C unterzogen. Die entstehende wachsartige Masse ist laut der FTIR-Untersuchung frei von alkoholischen Hydroxylgruppen.

Zur Herstellung von Siliciumtetraacetat wird Siliciumtetraacetat aus Siliciumtetrachlorid und wasserfreiem Natriumacetat anhand einer Vorschrift von Schuyten et al. (J. Amer. Chem. Soc. , 69 (1947), 2110) hergestellt.

In einer gegen die Außenluft abgeschotteten und mit trockenem Argon gefüllten Apparatur werden zunächst 0,01 mol (2,64 g) Siliciumtetraacetat in 40 ml absolutiertem Toluol suspendiert und zum Sieden gebracht. In die siedende Suspension wird eine Lösung aus 0,01 mol (3,27 g) alkoholfreiem Zirkoniumtetra-n-propylat in 60 ml absolutiertem Toluol zugetropft. Die sich zunächst ausbildende Trübung der Reaktionsmischung löst sich beim weiteren Zutropfen wieder auf. Die Reaktionsmischung wird für ca. 72 h unter Rückfluß am Siedepunkt gehalten. Dabei nimmt die Opazität der ursprünglich klaren Reaktionsmischung mit fortschreitender Reaktionsdauer deutlich zu, bis sich ein körniger Festkörper abzuscheiden beginnt.

5

Die flüssigen Bestandteile des entstandenen Gels werden bei 150 °C im Vakuum vollständig entfernt. Das FTIR-Spektrum (Figur 1) des getrockneten Gels zeigt weder Toluolbanden, noch Spuren des bei der Kondensation entstandenen Essigsäure-n-propylesters. Das FTIR-Spektrum belegt außerdem die Abwesenheit von hydroxylischen Gruppen im Xerogel.

Neben Toluol als Hauptbestandteil enthält das Destillat nur Essigsäure-n-propylester. Der Essigsäure-n-propylester konnte durch FTIR-Spektroskopie im abdestillierten Lösemittelgemisch neben dem Toluol durch charakteristische Absorptionsbanden bei 1742 cm$^{-1}$ und 1240 cm$^{-1}$ sowie durch gaschromatographische Trennung und anschließende massenspektroskopische Untersuchung eindeutig nachgewiesen werden.

Untersuchungen des Gels beziehungsweise Xerogels mittels Differenzthermoanalyse und Thermogravimetrie belegen, daß die an den Metallatomen des Netzwerks noch gebundenen organischen Reste im Sauerstoffstrom bis 550 °C völlig vertrieben sind. Der beim Tempern auftretende Massenverlust von 39,4 % erlaubt es, die Umsatzrate während der Kondensation mit 73 % zu bestimmen. Dem Netzwerk des Gels und Xerogels kann daher die Bruttostöchiometrie $ZrSiO_{2,8}(O\text{-}Pr)_{1,2}(O_2C\text{-}Me)_{1,2}$ zugesprochen werden. In der Formel steht Pr für n-Propyl und, sofern durch Isomerisierung gebildet, auch für Isopropyl und Me für Methyl.

Durch thermische Behandlung des Xerogels erfolgt stufenweise Kristallisation:

Die erste kristalline Phase beginnt sich bei 950 °C auszubilden. Es ist tetragonales Zirkoniumdioxid, welches in eine Matrix aus amorphem Siliciumdioxid eingebettet ist. Ab 1250 °C kristallisiert monoklines Zirkoniumdioxid gefolgt von Cristobalit. Ab 1400 °C erfolgt die Verbindungsbildung zum Zirkoniumsilikat, das nach einer Glühung von 24 h bei 1400 °C phasenrein aus dem wasserfreien Xerogel entsteht.

**Beispiel 2**: Herstellung von Zirkoniumdioxid

Zirkoniumtetraacetat $(Zr(OAc)_4)$ wurde aus Zirkoniumtetrachlorid und absoluter Essigsäure hergestellt (Ludwig J., Schwartz D., Inorg. Chem., 9 (1970), 607).

In einer gegen die Außenluft abgeschotteten und mit trockenem Argon gefüllten Appartur werden zunächst 0,01 mol (3,27 g) Zirkoniumtetraacetat in 40 ml absolutiertem Toluol suspendiert und zum Sieden gebracht. In die siedende Suspension wird eine Lösung aus 0,01 mol (3,27 g) alkoholfreiem Zirkoniumtetra-n-propylat in 60 ml absolutiertem Toluol zugetropft. Die sich zunächst ausbildende Trübung der Reaktionsmischung löst sich beim weiteren Zutropfen wieder auf. Die Reaktionsmischung wird für 60 h unter Rückfluß am Siedepunkt gehalten, bis sich ein körniger Festkörper abzuscheiden beginnt.

Die flüssigen Bestandteile des entstehenden Gels werden bei 150 °C im Vakuum vollständig entfernt. Neben Toluol als Hauptbestandteil konnte nur der Essigsäure-n-propylester im Destillat nachgewiesen werden. Das FTIR-Spektrum des getrockneten Gels, also des Xerogels, zeigt weder Toluolbanden noch Spuren des bei der Kondensation entstehenden Essigsäure-n-propylesters; das Spektrum belegt außerdem die Abwesenheit von hydroxylischen Gruppen. Figur 2 zeigt das FTIR-Spektrum des Xerogels (KBr-Pressling).

Untersuchungen des Gels und Xerogels mittels Differenzthermoanalyse und Thermogravimetrie belegen, daß die an Metallatomen des Netzwerks gebundenen organischen Reste im Sauerstoffstrom bis 500 °C völlig vertrieben sind. Der beim Tempern des Xerogels auftretende Massenverlust von 39,85 % erlaubt es, die Umsatzrate während der Kondensation mit 60 % zu bestimmen: dem Netzwerk des Gels und Xerogels kommt daher die Bruttostöchiometrie $ZrO_{1,2}(O\text{-}PR)_{0,8}(O_2C\text{-}Me)_{0,8}$ zu.

Die Kristallisation des Xerogels zu $ZrO_2$ verläuft stufenweise; die erste kristalline Phase beginnt sich bei 400 °C auszubilden. Es ist tetragonales Zirkoniumdioxid. Ab 700 °C kristallisiert monoklines Zirkoniumdioxid auf Kosten der tetragonalen Phase. Ab 900 °C liegt diese praktisch phasenrein vor.

**Beispiel 3**: Herstellung von $ZrV_2O_7$

Umgesetzt werden $VO(OPr)_3$ und $Zr(OAc)_4$ gemäß nachstehender Gleichung:

$$2\ VO(OPr)_3 + Zr(OAc)_4 \rightarrow V_2ZrO_{2+z}(OPr)_{6-z}(OAc)_{4-z} + z\ AcOPr$$

In einer gegen Außenluft abgeschotteten und mit trockenem Argon gefüllten Apparatur werden zunächst 3,57 g (0,011 mol) $Zr(OAc)_4$ in 60 ml trockenem Toluol suspendiert und diese Mischung zum Sieden gebracht. In die siedende Vorlage werden 5,33 g (0,022 mol) $VO(OPr)_3$ (Vanadyl-n-propylat), gelöst in 40 ml trockenem Toluol, langsam eingetropft. Die Reaktionsmischung färbt sich sehr schnell dunkelgrün, und es bildet sich ein schwarzgrüner, feiner Festkörper. Es wird 48 h unter Rückfluß gekocht. Anschließend wird die überstehende Lösung im Vakuum abgezogen. Das Destillat enthält nur Toluol und Essigsäure-n-propylester als Kondensationsprodukt.

Die DTA/TG-Untersuchung zeigt, daß das Xerogel beim Tempern im Sauerstoffstrom zur $ZrV_2O_7$-Keramik noch 25 % seiner Masse verliert. Dies läßt auf eine nahezu vollständige Kondensation während der Gelbildung schließen - z ist etwa 4.

**Beispiel 4**: $ZrSiO_4$ aus $Si(NMe_2)_4$ und $Zr(OAc)_4$

$$Zr(OAc)_4 + Si(NMe_2)_4 \rightarrow ZrSiO_z(NMe_2)_{4-z}(OAc)_{4-z} + z\ CH_3CONMe_2$$

In einer gegen Außenluft abgeschotteten und mit trockenem Argon gefüllten Apparatur werden zunächst 1,635 g (0,005 mol) $Zr(OAc)_4$ in 50 ml trockenem Toluol suspendiert und diese Mischung zum Sieben gebracht. In die siedende Vorlage werden 1,02 g (0,005 mol) $Si(NMe_2)_4$, gelöst in 50 ml trockenem Toluol, langsam eingetropft. Es wird für 48 h unter Rückfluß gekocht. Es bildet sich ein feiner, elfenbeinfarbener Festkörper. Anschließend wird die überstehende Lösung im Vakuum abgezogen.

Das Destillat wird mit GC/MS untersucht und es zeigt sich, daß N,N-Dimethyl-acetamid als Kondensationsprodukt gebildet wurde.

Die DTA/TG-Untersuchung zeigt, daß das Xerogel beim Tempern im Sauerstoffstrom zum $ZrSiO_4$-Festkörper noch 42 % seiner Masse verliert. Dies läßt auf eine ca. 61 %ige Kondensation während der Gelbildung schließen - z in der Formelgleichung ist damit etwa 2,44.

**Beispiel 5**: Herstellung von Cadmiumgelb-Einschlußpigmenten mittels des erfindungsgemäßen wasserfreien Sol-Gel-Prozesses

In einer gegen die Außenluft abgeschotteten und mit trockenem Argon gefüllten Appartur werden zunächst 0,075 mol (19,8 g) Siliciumtetraacetat mit 3,5 g Cadmiumgelb-Pigment (Fa. Degussa) in 300 ml absolutiertem Toluol suspendiert und zum Sieden gebracht. In die siedende Suspension wird eine Lösung aus 0,075 mol (24,52 g) alkoholfreiem Zirkoniumtetra-n-propylat in 450 ml absolutiertem Toluol zugetropft, wobei intensiv gerührt wird. Die Reaktionsmischung wird ca. 72 h mit intensiver Rührung unter Rückfluß am Siedepunkt gehalten. Anschließend wird noch 5 h bei Raumtemperatur gerührt, um der sich bildenden Gelhülle genug Zeit zu geben, sich um die Pigmentkörner zu legen. Nach Ende der Reaktion hat die intensiv gelbe Reaktionsmischung eine hohe Viskosität. Das Lösemittel wird zunächst bei 150 °C im Vakuum abgezogen und das trockene, pulverige, intensiv gelbe Xerogel mit den Pigmenteinschlüssen wird einem Temperprogramm unterzogen, damit gebundene organische Reste entfernt werden und die amorphe Gelhülle kristallisieren kann oder zumindest dicht wird. Das Temperprogramm ist wie folgt aufgebaut: Je 24 h bei 250 und 350 °C im dynamischen Vakuum; je 24 h bei 400 und 500 °C im Sauerstoffstrom; je 12 h bei 600 und 700 °C im Argonstrom.

Das so thermisch behandelte Einschlußpigment wird mit einer gewichtsgleichen Menge eines Mineralisators locker vermengt. Der Mineralisator besteht aus einer Mischung von 1 Gewichtsteil Natriumfluorid und 30 Gewichtsteilen Natriumchlorid.

Die Einschlußpigment-Mineralisator-Mischung wird 3 h bei einer Temperatur von 900 °C getempert. Nach dem Abkühlen wird der Mineralisator durch Auslaugen mit Wasser vom Einschlußpigment entfernt.

Die pulverdiffraktometrische Untersuchung des erfindungsgemäß hergestellten Einschlußpigments ergibt, daß die getemperte Umhüllung polykristallin aufgebaut ist und mehrphasig ist. Sie besteht aus tetragonalem und monoklinem Zirkoniumdioxid, einem großen Anteil Zirkonsilikat sowie amorphem Siliciumdioxid.

Es zeigt sich, daß die Hülle der erfindungsgemäß hergestellten Einschlußpigmente ausreichend dicht ist und in Natriumchloridschmelzen Temperaturen bis zu 1100 °C übersteht.

**Patentansprüche**

1.  Wasser- und hydroxylgruppenfreie Gele und Xerogele auf der Basis eines Netzwerks aus sauerstoffverbrückten Metall- und/oder Halbmetallatomen, wobei das Netzwerk eine oder mehrere Arten Metall- und/oder Halbmetallatome enthält und zusätzlich vorhandene nicht-verbrückte Valenzen der Metall- und/oder Halbmetallatome durch Sauerstoffatome und/oder durch einwertige Reste aus der Reihe -Q und/oder -OT abgesättigt sind, wobei -Q für -$OR^1$ oder -$NR^1R^2$, -T für -$C(O)R^3$ und $R^1$, $R^2$ und $R^3$ für einen aliphatischen oder aromatischen organischen Rest stehen und an Metall- und/oder Halbmetallatomen kein Halogen gebunden ist.

2.  Gele und Xerogele nach Anspruch 1,
    dadurch gekennzeichnet,
    daß sie als Metall- und/oder Halbmetallatome des Netzwerks solche der Elemente der 3. bis 5. Haupt- und Nebengruppe sowie der Seltenerdelemente enthalten und das Netzwerk eine, zwei, drei oder vier verschiedene Arten Metall- und/oder Halbmetallatome aufweist.

3. Gele und Xerogele nach Anspruch 1 oder 2,
   dadurch gekennzeichnet,
   daß $R^1$, $R^2$ und $R^3$ der Reste Q und T für Alkyl mit 1 bis 6 C-Atomen, vorzugsweise 1 bis 3 C-Atomen, steht.

4. Gele und Xerogele nach einem der Ansprüche 1 bis 3,
   gekennzeichnet durch ein Netzwerk der Bruttoformel
   $M^1{}_a M^2{}_b O_{(ax+by+z)} Q_{(am-2ax-z)} OT_{(bn-2by-z)}$, erhältlich durch einen Sol-Gel-Prozeß, wobei a Mol einer Metallverbindung der allgemeinen Formel (I)

$$M^1O_xQ_{(m-2x)} \tag{I}$$

mit b Mol einer Metallverbindung der allgemeinen Formel (II)

$$M^2O_y(OT)_{(n-2y)} \tag{II}$$

unter Bildung von z Mol Q-T in einem wasser- und hydroxylgruppenfreien Medium umgesetzt werden, worin bedeuten:

$M^1$: Metall- oder Halbmetallatom der Wertigkeit m;
$M^2$: Metall- oder Halbmetallatom der Wertigkeit n, wobei $M^1$ und $M^2$ gleich oder verschieden sein können;
x, y: die Zahl 0 für m, n gleich 3 und 0 oder 1 für m, n gleich 4 oder 5;
Q, T: Reste gemäß Anspruch 1;
z: eine Zahl zwischen größer 2 und dem kleineren Wert der Indices (am-2ax) und (bn-2by);
a, b: a = Molzahl (I), b = Molzahl (II), wobei a und b so gewählt sind, daß z größer 2 werden kann.

5. Gele und Xerogele nach einem der Ansprüche 1 bis 4, gekennzeichnet durch ein Netzwerk der Bruttoformel
   $V_2 Zr O_{2+z} Q_{(6-z)} (OT)_{(4-z)}$ ,
   $ZrSi O_z Q_{(4-z)} (OT)_{(4-z)}$ oder
   $Zr_2 O_z Q_{(4-z)} (OT)_{(4-z)}$ , wobei z jeweils eine beliebige Zahl größer 2 bis 4 ist.

6. Gele nach einem der Ansprüche 1 bis 5,
   dadurch gekennzeichnet,
   daß sie als Dispersionsmittel ein aprotisches, nichtnukleophiles Lösungsmittel, vorzugsweise aus der Reihe aromatischer Kohlenwasserstoffe und Isoparaffine mit einem Siedepunkt zwischen 80 und 230 °C,vorzugsweise 80 C bis 150 °C enthalten.

7. Verfahren zur Herstellung von wasser- und hydroxylgruppenfreien Gelen gemäß einem der Ansprüche 1 bis 6,
   dadurch gekennzeichnet,
   daß man einen nichthydrolytischen Sol-Gel-Prozeß in einem inerten, wasser- und hydroxylgruppenfreien organischen Lösungsmittel durchführt, wobei eine oder mehrere Verbindungen (I) aus der Reihe der Metall- oder Halbmetallalkoholate, -oxoalkoholate, -amide oder -oxoamide mit einer oder mehreren Verbindungen (II) aus der Reihe der Metall- oder Halbmetallcarboxylate oder -oxocarboxylate, wobei (I) und (II) als solche oder im Falle von Stoffgemischen im statischen Mittel mindestens zwei und vorzugsweise (I) und/oder (II) mehr als zwei abspaltbare Gruppen aufweisen, unter Abspaltung von Carbonsäureestern oder Carbonsäureamiden bis zur Gelbildung kondensiert werden.

8. Verfahren nach Anspruch 7,
   dadurch gekennzeichnet,
   daß man a Mole einer oder mehrerer Verbindungen der allgemeinen Formel $M^1O_xQ_{(m-2x)}$ (I) mit b Molen einer oder mehrerer Verbindungen der allgemeinen Formel $M^2O_y(OT)_{(n-2y)}$ (II) unter Abspaltung von z Molen Q-T kondensiert, worin bedeuten:

$M^1$: Metall- oder Halbmetallatom der Wertigkeit m und
$M^2$: Metall- oder Halbmetallatom der Wertigkeit n, wobei $M^1$ und $M^2$ gleich oder verschieden sein können;
m, n: eine ganze Zahl zwischen 2 und 6, wobei m oder n gleich oder größer 3 ist;
Q, T: Q gleich $-OR^1$ oder $-NR^1R^2$, T gleich $-C(O)R^3$, wobei $R^1$, $R^2$ und $R^3$ für aliphatische oder aromatische organische Reste stehen, vorzugsweise für Alkyl mit 1 bis 6 C-Atomen, stehen;
x, y: 0, 1 oder 2 bei einer Verbindung (I) bzw. (II) oder eine beliebige Zahl zwischen 0 und 2 bei Stoffgemischen (I) bzw. (II), wobei aber (m-2x) und (n-2y) für einen Wert von mindestens 2 bis m bzw. von 2 bis n stehen;

a, b: Molzahl (I) bzw. (II), wobei a und b so gewählt werden, daß bei Eintritt der Gelbildung z einen Wert zwischen größer 2 und dem kleineren Wert der Indices (am-2ax) und (bn-2by) annimmt.

9. Verfahren zur Herstellung von wasser- und hydroxylgruppenfreien Xerogelen gemäß einem der Ansprüche 1 bis 5, dadurch gekennzeichnet,
daß man ein gemäß Anspruch 7 oder 8 hergestelltes Gel vom organischen Lösungsmittel befreit, vorzugsweise durch Verdampfen des Lösungsmittels unter vermindertem Druck.

10. Verwendung der Gele und Xerogele nach einem der Ansprüche 1 bis 6 zur Herstellung oxidischer keramischer Materialien und zum Umhüllen teilchenförmiger Stoffe mit einer Schicht eines oxidischen keramischen Materials.

## Claims

1. Anhydrous gels and xerogels containing no hydroxyl groups and based on a network of oxygen-bridged metal and/or semi-metal atoms, wherein the network contains one or more species of metal and/or semi-metal atoms and additionally present unbridged valencies of the metal and/or semi-metal atoms are saturated by oxygen atoms and/or by monovalent residues from the series -Q and/or -OT, wherein -Q denotes $-OR^1$ or $-NR^1R^2$, -T denotes $-C(O)R^3$ and $R^1$, $R^2$ and $R^3$ denote an aliphatic or aromatic organic residue, and no halogen is attached to metal and/or semi-metal atoms.

2. Gels and xerogels according to claim 1,
characterised in that
the network metal and/or semi-metal atoms they contain are those of the elements of main group and subgroup III to V and the rare-earth elements and the network has one, two, three or four different species of metal and/or semi-metal atoms.

3. Gels and xerogels according to claim 1 or 2,
characterised in that
$R^1$, $R^2$ and $R^3$ of the residues Q and T denote alkyl with 1 to 6 C atoms, preferably 1 to 3 C atoms.

4. Gels and xerogels according to one of claims 1 to 3, characterised by a network of the empirical formula $M^1_a M^2_b O_{(ax+by+z)} Q_{(am-2ax-z)} OT_{(bn-2by-z)}$, obtainable by a sol-gel process, wherein a moles of a metal compound of the general formula (I)

$$M^1O_xQ_{(m-2x)} \tag{I}$$

are reacted in an anhydrous medium containing no hydroxyl groups with b moles of a metal compound of the general formula (II)

$$M^2O_y(OT)_{(n-2y)} \tag{II}$$

forming z moles of Q-T, in which

$M^1$: means a metal or semi-metal atom of valency m;
$M^2$: means a metal or semi-metal atom of valency n, wherein $M^1$ and $M^2$ may be identical or different;
x, y: mean the number 0 for m, n equals 3 and 0 or 1 for m, n equals 4 or 5; Q, T: mean residues according to claim 1;
z: means a number between greater than 2 and the lower value of the indices (am-2ax) and (bn-2by);
a, b: a = number of moles of (I), b = number of moles of (II), wherein a and b are selected such that z may be greater than 2.

5. Gels and xerogels according to one of claims 1 to 4, characterised by a network of the empirical formula
$V_2 Zr O_{2+z} Q_{(6-z)} (OT)_{(4-z)}$,
$ZrSi O_z Q_{(4-z)} (OT)_{(4-z)}$ or
$Zr_2 O_z Q_{(4-z)} (OT)_{(4-z)}$, wherein z is in each case any desired number greater than 2 up to 4.

**6.** Gels according to one of claims 1 to 5,
characterised in that
they contain as dispersant an aprotic, non-nucleophilic solvent, preferably from the series of aromatic hydrocarbons and isoparaffins with a boiling point between 80 and 230 °C, preferably from 80 °C to 150 °C.

**7.** Process for the production of anhydrous gels containing no hydroxyl groups according to one of claims 1 to 6,
characterised in that
a non-hydrolytic sol-gel process is performed in an inert anhydrous organic solvent containing no hydroxyl groups, wherein one or more compounds (I) from the series of metal or semi-metal alkoxides, oxoalkoxides, amides or oxoamides are condensed, with elimination of carboxylic acid esters or carboxylic acid amides, until gelation occurs with one or more compounds (II) from the series of metal or semi-metal carboxylates or oxocarboxylates, wherein (I) and (II) themselves, or in the case of mixtures of substances on a statistical average, have at least two and preferably (I) and/or (II) have more than two eliminable groups.

**8.** Process according to claim 7,
characterised in that
a moles of one of more compounds of the general formula $M^1O_xQ_{(m-2x)}$ (I) are condensed with b moles of one of more compounds of the general formula $M^2O_y(OT)_{(n-2y)}$ (II) with elimination of z moles of Q-T, in which

$M^1$:  means a metal or semi-metal atom of valency m and
$M^2$:  means a metal or semi-metal atom of valency n, wherein $M^1$ and $M^2$ may be identical or different;
m, n:  mean an integer between 2 and 6, wherein m or n is greater than or equal to 3;
Q, T:  Q equals $-OR^1$ or $-NR^1R^2$, T equals $-C(O)R^3$, wherein $R^1$, $R^2$ and $R^3$ denote aliphatic or aromatic organic residues, preferably alkyl with 1 to 6 C atoms;
x, y:  mean 0, 1 or 2 in one compound (I) or (II) or any desired number between 0 and 2 in mixtures of (I) or (II), wherein, however, (m-2x) and (n-2y) respectively denote a value of at least 2 up to m and of 2 up to n;
a, b:  mean the number of moles of (I) or (II), wherein a and b are selected such that, on commencement of gelation, z assumes a value of between greater than 2 and the lower value of the indices (am-2ax) and (bn-2by).

**9.** Process for the production of anhydrous xerogels containing no hydroxyl groups according to one of claims 1 to 5,
characterised in that
the organic solvent is removed from a gel produced according to claim 7 or 8, preferably by evaporating the solvent under reduced pressure.

**10.** Use of the gels and xerogels according to one of claims 1 to 6 for the production of oxide ceramic materials and for encapsulating particulate substances in a layer of an oxide ceramic material.

## Revendications

**1.** Gels et xérogels dépourvus d'eau et de groupes hydroxyles à base d'un réseau d'atomes de métaux et/ou de métalloïdes reliés par des ponts oxygène, le réseau présentant une ou plusieurs espèces d'atomes de métaux et/ou de métalloïdes et les valences des atomes de métaux et/ou de métalloïdes non reliés par des ponts, qui sont en outre présentes, sont saturées par des atomes d'oxygène et/ou par des radicaux monovalents de la série -Q et/ou -OT, où -Q représente $-OR^1$ ou $-NR^1R^2$, -T représente $-C(O)R^3$ et $R^1$, $R^2$ et $R^3$ représentent un radical organique aliphatique ou aromatique, et aucun atome d'halogène n'est lié aux atomes de métaux et/ou de métalloïdes.

**2.** Gels et xérogels selon la revendication 1,
caractérisés en ce qu'

• ils contiennent comme atomes de métaux et/ou du métalloïdes du réseau ceux des éléments des troisième à cinquième groupes principaux et secondaires ainsi que les éléments de terres rares,
• le réseau présente une, 2, 3 ou 4 espèces différentes d'atomes de métaux et/ou de métalloïdes.

**3.** Gels et xérogels selon la revendication 1,
caractérisés en ce que
$R^1$, $R^2$ et $R^3$ des radicaux Q et T représentent un alkyle ayant de 1 à 6 atomes de carbone, de préférence de 1 à 3 atomes de carbone.

4. Gels et xérogels selon l'une des revendications 1 à 3,
caractérisés par
un réseau de formule brute
$M^1_a M^2_b O_{(ax+by+z)} Q_{(am-2ax-z)} OT_{(bn-2by-z)}$, que l'on peut obtenir par un procédé sol-gel, où l'on fait réagir a moles d'un composé métallique de formule générale (I)

$$M^1 O_x Q_{(m-2x)} \qquad\qquad\qquad (I)$$

avec b moles d'un composé métallique de formule générale (II)

$$M2Oy(OT)(n-2y) \qquad\qquad\qquad (II)$$

avec formation de z moles de Q-T dans un milieu dépourvu d'eau et de groupes hydroxyles, où les symboles ont les significations suivantes :

$M^1$ : atome de métal ou de métalloïde de la valence m ;
$M^2$ : atome de métal ou de métalloïde de la valence n, ou $M^1$ et $M^2$ peuvent être identiques ou différents
x, y, : le nombre 0 pour m, n = 3 et 0 ou 1 pour m, n = 4 ou 5 ;
Q, T : radicaux selon la revendication 1 ;
z : nombre compris entre une valeur supérieure à 2 et la plus petite valeur des indices (am-2ax) et (bn-2by) ;
a, b : a = nombre de moles de (I), b = nombre de moles de (II), où a et b sont choisis de manière que z puisse devenir supérieur à 2.

5. Gels et xérogels selon une des revendications 1 à 4,
caractérisés par
un réseau ayant la formule brute
$V_2 Zr O_{2+z} Q_{(6-z)} (OT)_{(4-z)}$,
$ZrSi O_z Q_{(4-z)} (OT)_{(4-z)}$ ou
$Zr_2 O_z Q_{(4-z)} (OT)_{(4-z)}$, dans laquelle z représente à chaque fois un nombre quelconque dont la valeur est supérieure à 2 jusqu'à 4.

6. Gels selon l'une des revendications 1 à 5,
caractérisé en ce qu'
ils contiennent comme dispersant un solvant aprotique, non nucléophile, de préférence de la série des hydrocarbures aromatiques et des isoparaffines avec un point d'ébullition compris entre 80 et 230°C, de préférence entre 80°C et 150°C.

7. Procédé de fabrication de gels contenant de l'eau et des groupes hydroxyles selon l'une des revendications 1 à 6,
caractérisé en ce qu'
on réalise un procédé sol-gel non hydrolytique dans un solvant organique inerte, dépourvu d'eau et de groupes hydroxyles, où l'on condense un ou plusieurs composés (I) de la série des alcoolates, oxoalcoolates, amides ou oxoamides de métaux ou de métalloïdes avec un ou plusieurs composés (II) de la série des carboxylates ou oxocarboxylates de métaux ou de métalloïdes, où (I) et (II) présentent tels quels ou dans le cas des mélanges de produits dans le milieu statique au moins deux et de préférence (I) et/ou (II) plus de deux groupes séparables, avec élimination d'esters d'acides carboxyliques ou d'amides d'acides carboxyliques jusqu'à la formation d'un gel.

8. Procédé selon la revendication 7,
caractérisé en ce qu'
on condense a moles d'un ou plusieurs composés de formule générale $M^1 O_x Q_{(m-2x)}$ (I) avec b moles d'un ou plusieurs composés de formule générale $M^2 O_y (OT)_{(n-2y)}$ (II) avec élimination de z moles de Q-T, où les symboles ont les significations suivantes :

$M^1$ : atome de métal ou de métalloïde de la valence m et
$M^2$ : atome de métal ou de métalloïde de la valence n, où $M^1$ et $M^2$ peuvent être identiques ou différents ;
m, n : représentent un nombre entier compris entre 2 et 6, où m ou n est supérieur ou égal à 3 ;
Q, T: Q représente $-OR^1$ ou $-NR^1R^2$, T représente $-C(O)R^3$, ou $R^1$, $R^2$ et $R^3$ représentent des radicaux organiques aliphatiques ou aromatiques, de préférence un alkyle ayant de 1 à 6 atomes de carbone ;
x, y : 0 , 1 ou 2 pour un composé (I) ou selon les cas (II) ou un nombre quelconque compris entre 0 et 2 dans les mélanges de corps (I) ou selon les cas (II), mais où (m-2x) et (n-2y) ont une valeur d'au moins 2 à m ou selon les cas de 2 à n ;

a, b : nombre de moles de (I) ou selon les cas de (II), où a et b sont choisis de manière que lors de l'apparition de la formation du gel z prenne une valeur comprise entre plus de 2 et la plus petite valeur des indices (am-2ax) et (bn-2by).

9. Procédé de fabrication de xérogels dépourvus d'eau et de groupes hydroxyles selon une des revendications 1 à 5, caractérisé en ce qu'
on débarrasse du solvant organique un gel fabriqué selon la, revendication 7 ou 8, de préférence par évaporation du solvant à pression réduite.

10. Utilisation des gels et xérogels selon l'une des revendications 1 à 6 pour la fabrication de matériaux céramiques par voie d'oxydation et pour l'enrobage de corps particulaires avec une couche d'un matériau oxydocéramique.

Fig. 1

Fig. 2

13